# EUROPEAN PATENT SPECIFICATION

(11) **EP 1 790 439 B1**
(45) Date of publication and mention of the grant of the patent: **03.09.2008**
(21) Application number: 06024331.8
(22) Date of filing: 23.11.2006
(51) Int. Cl.: B25F 5/00, B23B 49/00

(54) **An adjustable speed structure with axle lock for electric drill**
Drehzahlregelbare Struktur mit Achsenblockiervorrichtung für elektrische Bohrmaschine
Structure à vitesse ajustable avec dispositif de verouillage de la broche pour perceuse électrique

(30) Priority: 23.11.2005 CN 200520116657 U
(43) Date of publication of application: 30.05.2007
(73) Proprietor: Zhejiang Crown Power Tools Manu. Co. Ltd., Jinhua Industrial Zone, JinHua Zhejiang 321000 (CN)
(72) Inventor: Xu, Jianheng, Jin Hua, ZheJiang Postcode 321000 (CN)
(74) Representative: Müller, Frank Peter

(56) References cited:
- EP-A1- 0 612 588
- EP-A1- 1 129 826
- DE-A1- 3 234 571
- US-A- 1 581 927
- US-A- 2 911 841

## Description

### [Technical field]

The present invention relates to electric tools, especially to the adjustable speed structure for electric drill.

### [Background]

At present, the mechanical electric drills of variable speed only have high position and low position, and the neutral position is between them. Generally, the operating sequence is high position-neutral position-low position and the speed of the bit can be adjusted by switching the high-low position. In the process of using the electric drill, the bits with different specification need be often changed and then clamped after that. The present mechanical electric drills of variable speed can clamp the bits by the means of using both the axle lock and the drill chuck together. The specific operation are as follows: firstly pressing down the axle lock button, and then running the chuck neck so as to drive the drill chuck body to rotate. Because the drill chuck body is connected rigidly with the output shaft, the output shaft also can rotate together with it. After it rotates to a certain angle, the axle lock pin will drop into the grooves on the output shaft, thus the output shaft will be locked, that is, the drill chuck body will be locked. While the chuck neck is rotated again, the bit will be clamped. The operation of adopting this lock structure to clamp the bits is relatively complex, which must use one hand to press axle lock, at the same time, fix the body of the electric tools, and again rotate the chuck neck so as to clamp the bit. Because common people have only two hands, it is relatively troublesome to perform the three operations at one time; and the barrier structure is not very firm with existence of certain hidden dangers. If the axle lock is pressed when the machine power is on, it will be damaged.

So, it has become our important research subject on how to adopt the most effective structure to clamp the bit through axle lock fixing, which is not only firm but also convenient and safe.

EP 0 612 588 A1 relates to a gear device for electric drills, according to the preamble of claim 1 in which means are provided for locking off a spindle which is adapted to accommodate tools, wherein the locking is provided by means of a manually displaceable operating element, such as a rotatable knob or displaceable slider.

### [Summary of the invention]

An object of the present invention is to solve the problems of the prior arts and to provide a sort of adjustable speed structure for electric drill with axle lock, which is of firm barrier structure, convenience and safety.

To accomplish the above object, a sort of adjustable speed structure with axle lock for electric drill is provided according to the present invention, which comprises a duplex gear, a low speed gear, and a high-speed gear. The above-mentioned duplex gear comprises duplex low speed teeth, which can mesh with the low speed gear 21 when the duplex gear 1 is adjusted to one side thereof and duplex high-speed teeth, which can mesh with the high-speed gear 22 when the duplex gear 1 is adjusted to one side thereof. The duplex gear further comprises an axle lock gear, a baffle block, and an intermediate shaft. The said low speed gear and high-speed gear are fixed on the intermediate shaft with a definite distance. The said axle lock gear is round with gear teeth on the edge of round part and steps thereon so that it can be blocked off by the baffle block. While rotating to a certain angle, the axle lock gear will be blocked off by the baffle block. When adjusted to the middle position, the duplex gear will mesh with the axle lock gear.

Further, as the duplex gear is adjusted to the middle position, the duplex low speed teeth on it can mesh with the axle lock gear.

The beneficial effect of the invention is that it discloses a sort of adjustable speed structure with axle lock for electric drill, which adds an axle lock position between high position and low position of the original adjustable speed structure. Thus, when it is need to clamp the drill bit, it is sufficient only to rotate the speed adjustment knob to the axle lock position and fix the electric tool body, and then turn the chuck neck to conveniently clamp the drill. It is not necessary to press the axle lock on the original structure at the same time and the operation is very convenient. The low position, high position and axle lock position in this structure are mutually repulsive, so we can only select one of the three at one time. When it lies in the axle lock position, the torque will not be transferred from the intermediate shaft to the duplex gear and output shaft, and neither will be the rotation. When the axle is locked, the power transfer must be disconnected, which can avoid unnecessary damage and easily make the barrier structure of the axle lock gear done very firmly, thus the larger torque can be laid on the chuck neck so as to make the chuck clamped more tightly.

The characterization and advantages of the present invention will be described in details by the following embodiments with reference to the accompanying drawings.

### [Description of the accompanying drawings]

Fig. 1 schematically shows the adjustable speed structure with axle lock for electric drill at the state of low position.
Fig. 2 schematically shows the adjustable speed structure with axle lock for electric drill at the state of axle lock position.
Scheme 3 schematically shows the adjustable speed structure with axle lock for electric drill at the state of high position.

### [Specific embodiments]

### Embodiment 1

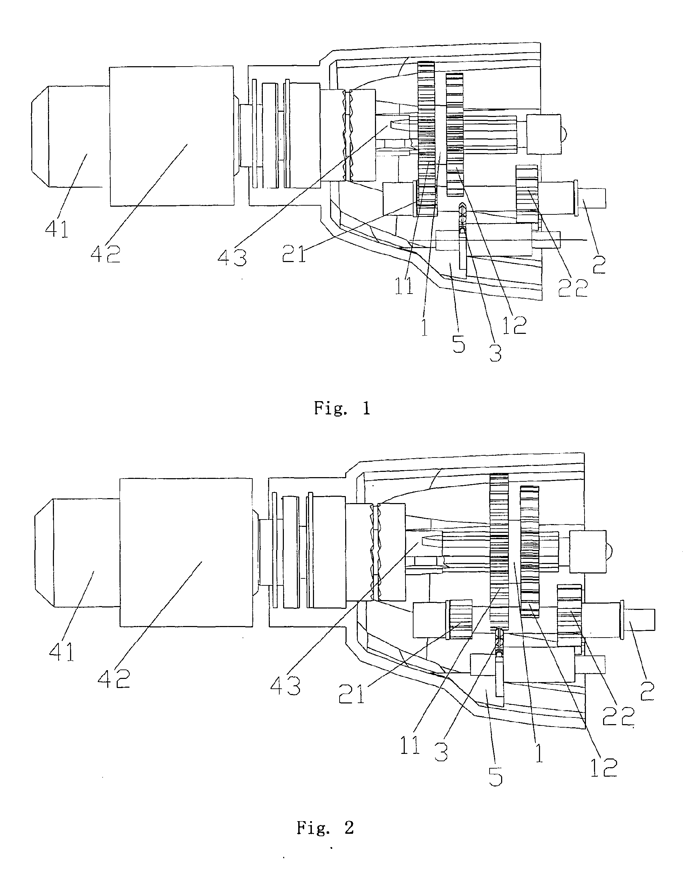

As shown in Fig.1, a sort of adjustable speed structure with axle lock for electric drill at the state of low position is given, which includes an duplex gear 1, an low speed gear 21, and the high speed gear 22. The said duplex gear 1 comprises duplex low speed teeth 11, which can mesh with the low speed gear 21 when the duplex gear 1 is adjusted to one side thereof and duplex high speed teeth 12, which can mesh with the high-speed gear 22 when the duplex gear 1 is adjusted to one side thereof. The duplex gear 1 further comprises an axle lock gear 3 and a baffle block 5. When the said axle lock gear 3 rotates to a certain angle, it will be blocked off by the baffle block 5, with which the duplex gear 1 will mesh when adjusted to the middle position. The said low speed gear 21 and high-speed gear 22 are fixed on the intermediate shaft 22 in a definite distance. The said axle lock gear 3 is round with gear teeth on the edge of the round part and steps on it so that the axle lock gear 3 can be blocked off by the baffle block 5. As the duplex gear 1 is adjusted to the middle position, the duplex low speed teeth 11 will mesh with the axle lock gear 3. As the speed adjustment knob is adjusted to the direction of low position, the duplex gear 1 will move to the left following it. When adjusted up to the low position, the duplex low speed gear 11 will mesh with the low speed gear 21, and produce low speed power transfer.

### Embodiment 2

As shown in Fig.2, a sort of adjustable speed structure with axle lock for electric drill at the state of axle lock position is given, which includes an duplex gear 1, an low speed gear 21, and the high speed gear 22. The said duplex gear1 comprises duplex low speed teeth 11, which can mesh with the low speed gear 21 when the duplex gear 1 is adjusted to one side thereof and duplex high speed teeth 12, which can mesh with the high-speed gear 22 when the duplex gear 1 is adjusted to one side thereof. The duplex gear 1 further comprises an axle lock gear 3 and a baffle block 5. When the said axle lock gear 3 rotates to a certain angle, it will be blocked off by the baffle block 5, with which the duplex gear 1 will mesh when adjusted to the middle position. The said low speed gear 21 and high-speed gear 22 are fixed on the intermediate shaft 22 in a definite distance. The said axle lock gear 3 is round with gear teeth on the edge of the round part and steps on it so that the axle lock gear 3 can be blocked off by the baffle block 5. As the duplex gear 1 is adjusted to the middle position, the duplex low speed teeth 11 will mesh with the axle lock gear 3. When the speed adjustment knob is adjusted up to the axle lock position, the duplex low speed teeth 11 will mesh with the axle lock gear 3. When the axle lock gear 3 rotates to a certain angle, it will be blocked off by the barrier block 5 and can't run. Because the duplex low speed teeth 11 mesh with the axle lock gear 3, the duplex gear 1 can only also rotate a limited angle. The drill chuck body 41 and the output shaft 43 is connected rigidly, so the drill chuck body 41 only can rotate a limited angle too. At this time, the drill bit will be clamped through continually screwing the chuck neck 42.

### Embodiment 3

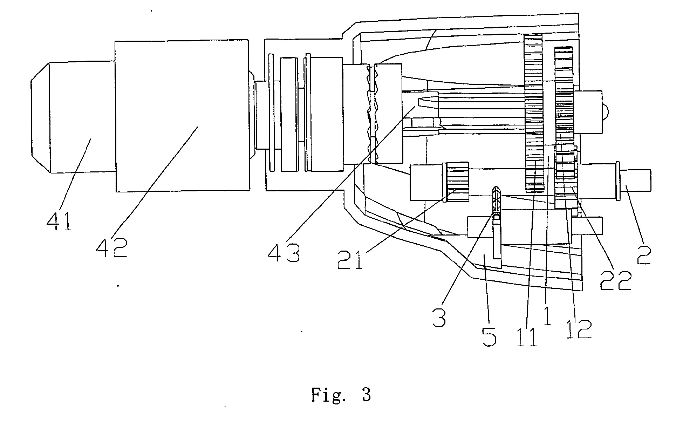

As shown in Fig.3, a sort of adjustable speed structure with axle lock for electric drill at the state of high position is given, which includes an duplex gear 1, an low speed gear 21, and the high speed gear 22. The said duplex gear 1 comprises duplex low speed teeth 11, which can mesh with the low speed gear 21 when the duplex gear 1 is adjusted to one side thereof and duplex high speed teeth 12, which can mesh with the high-speed gear 22 when the duplex gear 1 is adjusted to one side thereof, The duplex gear 1 further comprises an axle lock gear 3 and a baffle block 5. When the said axle lock gear 3 rotates to a certain angle, it will be blocked off by the baffle block 5, with which the duplex gear 1 will mesh when adjusted to the middle position. The said low speed gear 21 and high-speed gear 22 are fixed on the intermediate shaft 22 in a definite distance. The said axle lock gear 3 is round with gear teeth on the edge of the round part and steps on it so that the axle lock gear 3 can be blocked off by the baffle block 5. As the duplex gear 1 is adjusted to the middle position, the duplex low speed teeth 11 will mesh with the axle lock gear 3. As the speed adjustment knob is rotated to the direction of high position, the duplex gear 1 will move to the right as followed. When rotated up to the high position, the duplex high-speed teeth 12 will mesh with the high speed gear 21, and thus produce high speed power transfer.

## Claims

1. An adjustable speed structure with axle lock for electric drill, comprising a duplex gear (1) having a low speed gear (21) and a high speed gear (22), the said duplex gear (1) comprising duplex low speed teeth (11) thereon, which can mesh with the low speed gear (21) when the duplex gear (1) is adjusted to one side thereof ; and duplex high speed teeth (12) thereon, which can mesh with the high-speed gear (22) when the duplex gear (1) is adjusted to the other side thereof; and an intermediate shaft (2), the said low speed gear (21) and said high speed gear (22) being fixed on the intermediate shaft (2) at a definite distance **characterized in that** the structure further comprises an axle lock gear (3) and a baffle block (5), said axle lock gear (3) being round with gear teeth on the edge of the round part and steps on it so that the axis lock gear (3) can be blocked off by the baffle block (5), wherein, when rotated to a certain angle, the axis lock gear (3) will be blocked off by the barrier block (5) and, when the duplex gear (1) is adjusted up to the middle position, it will mesh with the axis lock gear (3).

2. The adjustable speed structure with axle lock for electric drill according to the claim 1 wherein the duplex low speed teeth (11) can mesh with the axis lock gear (3) when the duplex gear (1) is adjusted to the middle position.

## Patentansprüche

1. Einstellbare Drehzahlregelanordnung mit Achssperre für Elektrobohrmaschine, umfassend ein Doppelzahnrad (1) mit einem Zahnrad (21) für niedrige Drehzahl und einem Zahnrad (22) für hohe Drehzahl, wobei das Doppelzahnrad (1) daran Doppelzähne (11) für niedrige Drehzahl, die mit dem Zahnrad (21) für niedrige Drehzahl in Eingriff kommen können, wenn das Doppelzahnrad (1) auf eine Seite davon eingestellt ist; und daran Doppelzähne (12) für hohe Drehzahl, die mit dem Zahnrad (22) für hohe Drehzahl in Eingriff kommen können, wenn das Doppelzahnrad (1) auf die andere Seite davon eingestellt ist; und eine Zwischenwelle (2) umfasst, wobei das Zahnrad (21) für niedrige Drehzahl und das Zahnrad (22) für hohe Drehzahl in einem bestimmten Abstand an der Zwischenwelle (2) befestigt sind, **dadurch gekennzeichnet, dass** die Anordnung des Weiteren ein Achsgesperre (3) und einen Ablenkblock (5) umfasst, wobei das Achsgesperre (3) rund ist und Zahnradzähne an der Kante des runden Teils und Stufen daran aufweist, so dass das Achsgesperre (3) durch den Ablenkblock (5) blockiert werden kann, wobei, nach Drehung zu einem bestimmten Winkel, das Achsgesperre (3) durch den Sperrblock (5) blockiert wird, und, wenn das Doppelzahnrad (1) bis zu der mittleren Position eingestellt ist, es mit dem Achsgesperre (3) in Eingriff kommt.

2. Einstellbare Drehzahlregelanordnung mit Achssperre für Elektrobohrmaschine nach Anspruch 1, wobei die Doppelzähne (11) für niedrige Drehzahl mit dem Achsgesperre (3) in Eingriff kommen können, wenn das Doppelzahnrad (1) auf die mittlere Position eingestellt ist.

## Revendications

1. Structure à vitesse réglable dotée d'un verrouillage d'axe destinée à une perceuse électrique, comprenant un engrenage duplex (1), avec un pignon à faible vitesse (21) et un pignon à vitesse élevée (22), ledit engrenage duplex (1) étant pourvu de dents duplex à faible vitesse (11) qui sont aptes à s'engrener avec le pignon à faible vitesse (21) lorsque l'engrenage duplex (1) est ajusté sur l'un des côtés de celui-ci ; et étant pourvu de dents duplex à vitesse élevée (12) qui sont aptes à s'engrener avec le pignon à vitesse élevée (22) lorsque l'engrenage duplex (1) est ajusté sur l'autre côté de celui-ci ; et un arbre intermédiaire (2), ledit pignon à faible vitesse (21) et ledit pignon à vitesse élevée (22) étant fixés sur l'arbre intermédiaire (2) suivant une distance définie, **caractérisée en ce que** la structure comporte en outre un pignon de verrouillage d'axe (3) et un bloc déflecteur (5), ledit pignon de verrouillage d'axe (3) ayant une forme ronde et étant muni de dents de pignon sur le bord de la partie ronde et muni de gradins de sorte que le pignon de verrouillage d'axe (3) peut être arrêté par le bloc déflecteur (5), cas dans lequel lorsque le pignon de verrouillage d'axe (3) est tourné jusqu'à un certain angle il sera arrêté par le bloc déflecteur (5) et, il s'engrènera avec le pignon de verrouillage d'axe (3) quand l'engrenage duplex (1) est ajusté au niveau de la position centrale.

2. Structure à vitesse réglable dotée d'un verrouillage d'axe destinée à une perceuse électrique selon la revendication 1, les dents duplex à faible vitesse (11) étant aptes à s'engrener avec le pignon de verrouillage d'axe (3) lorsque l'engrenage duplex (1) est ajusté au niveau de la position centrale.
